Europäisches Patentamt

**European Patent Office**

**Office européen des brevets**

(19)

(11) Publication number: **0 167 638**
**A1**

(12) # EUROPEAN PATENT APPLICATION

(21) Application number: **84107508.8**

(22) Date of filing: **28.06.84**

(51) Int. Cl.⁴: **A 01 G 31/02**
**A 01 C 1/02**

(43) Date of publication of application:
**15.01.86 Bulletin 86/3**

(84) Designated Contracting States:
**AT BE CH DE FR GB IT LI LU NL SE**

(71) Applicant: **Koike, Yujiro**
**310-6, Tenma-cho**
**Hamamatsu-shi Shizuoka-ken(JP)**

(72) Inventor: **Koike, Yujiro**
**310-6, Tenma-cho**
**Hamamatsu-shi Shizuoka-ken(JP)**

(74) Representative: **Walter, Helmut**
**Aubingerstrasse 81**
**D-8000 München 60(DE)**

(54) Method of hydroponically growing plant sprouts and apparatus therefor.

(57) A floating bed useful for hydroponically germinating seeds of a plant and growing the germinated sprouts thereon. The floating bed is floatable by itself on water and includes a pad (1) formed of a hydrophobic material such as foamed polystyrene and provided with one or more through holes (2). The through holes have a size so that it can continually retain water therein by capillary attraction during the float of the bed on water. The seeds are placed on the pad and the floating bed is floated on the surface of water to allow the seeds to germinate and the germinated sprouts to grow with the roots thereof passing through the through holes.

Fig. 1

EP 0 167 638 A1

Method Of Hydroponically Growing Plant Sprouts And Apparatus Therefor

Background of the Invention

This invention relates to a method and an apparatus for hydroponically growing plant sprouts.

There are known a lot of methods for growing plant sprouts in soilless media. Hydroponics is one such method in which a plant is supported by a bed disposed on or above the surface of water, optionally containing nutrients, with the roots of the plant passing through the bed and extending into the water. Several beds for hydroponics have thus far been proposed such as (a) shaped bodies, such as plates and trays, formed of a close celled, synthetic polymeric foam material, (b) shaped bodies prepared by molding a mixture of close celled, synthetic polymeric foam particles and a vegetable organic material, (c) plates formed of a mixture of a close celled, synthetic polymeric foam particles, open celled, synthetic polymeric foam particles and scrabs, and (d) perforated sheets or wire nets mounted on buoyant frames. These hydroponic beds, however, are not quite satisfactory in practice.

The bed of the aforementioned type (a) has a very small bulk density and is floatable by itself. However, since the floatable shaped body per se has no water permeability, it is not possible to sow seeds of a plant directly thereon for germination. Thus, the shaped body is processed to form relatively large perforations or apertures on which seedlings are transplanted.

Alternatively, the perforations are covered with water absorbent materials such as pebbles, sand, and peat moss, in which seeds are sowed. In either case, it is not easy to maintain a suitable humid growing environment throughout their growth.

The second, type (b) bed is suited for the germination of rice seeds. Since the vegetable organic material, which serves both as a binder for the shaped bodies and a fertilizer for the plant, is soluble in water, they are broken upon harvesting and cannot be reused.

In the hydroponic plate of type (c), the close celled foam particles serve to provide the plate with flotage, while the scrabs and the open celled foam particles serve as a water absorbent. The scrabs additionally function as a fertilizer for the growth of the plant. Thus, the mixing ratio of respective components is very important in that it has a great influence upon the moisture environment necessary for the germination of seeds and the growth of the germinated sprouts. Although the availability of the three components as waste materials is one pf tje ,erots pf tje type (c) bed, the use of waste ,ateroaös makes it difficult to adjust the mixing ratio to a predetermined range because of the lack of uniformity in quality of the waste materials. Moreover, with the type (c) bed, the roots of sprouts extend into the pores of the open celled foam particles and the softened portions formed by the rot of the scrabs and entwine with each other. In harvesting, therefore, the matured sprouts are cut near the roots and the roots remaining in the bed must be allowed to rot in order to reuse the bed. In addition, because the type (c) bed, which contains scrabs and rot roots, is liable to become infected by germs, it is not suited for the culture of clean plant sprouts which are generally eaten as raw. For the same hygienical reason, the type (c) bed is not suited for indoor use, especially of homes.

The bed of the above-described type (d) is designed so that when it is floated on the surface of water, the pad of a perforated sheet or wire net is positioned just above the level of the water. Seeds of a plant are spread on the pad for germination. In this case, although the distance between the pad and the surface of water is maintained substantially unchanged at an early stage of growth of the sprouts, the pad will be submerged as the sprouts grow higher, i.e. with the increase in weight of the sprouts. Therefore, it becomes necessary to lift the bed on a suitable support to keep the sprouts in a suitable growing environment.

## Summary of the Invention

It is, therefore, an object of the present invention to provide a floating bed for hydroponically growing plant sprouts which is free of the defects of the conventional beds.

Another object of the present invention is to provide a floating bed of the above-mentioned type which permits easy harvest without leaving any roots of the plant therein and can be reused immediately after the harvest.

It is a further object of the present invention to provide an inexpensive, easy to produce floating bed with which the growth of plant sprouts can be effected without need of specific controls such as watering, spraying and water level adjustment.

It is yet a further object of the present invention to provide a method which is especially suited for the cultivation of fresh, clean vegitables, such as Japanese radish sprouts and Adenophora remotiflora Miq..

In accomplishing the foregoing objects, there is provided in accordance with the present invention a floating bed for hydroponically growing plant sprouts, which includes a pad having a three dimensional structure with its opposite sides being substantially parallel with each other. The pad is formed of a substantially hydrophobic material and is provided with one or more through holes or apertures each extending between and in direction substantially vertical to the opposite sides to define a roots grow passage therein. Each of the passages has such a size as to provide capillary attraction. The floating bed is adopted to float on water with the opposite, top and bottom sides of the pad being positioned substantially in parallel with the horizontal plane so that each roots grow passage can always retain water therein during the float of the bed on water.

Water, on which the floating bed is floated, may be heated to about 40°C so that the germination of the plant seeds and the growth of germinated sprouts are accelerated.

Further, said water may be provided with air flow so that the growth of the roots are accelerated.

A sun-ray lamp also may be used to accelerate the growth of the plant, regardless of day or night.

In another aspect, the present invention provides a method of germinating seeds of a plant and growing the germinated sprouts with the use of the above-described floating bed.

Brief Description of the Drawings

Other objects, features and advantages of the present invention will become apparent from the detailed description of the preferred embodiments of the present invention which follows, when considered in light of the accompanying drawings, in which:

Fig.1 is a perspective view, cut away in part, schematically showing one embodiment of the floating bed according to the present invention;

Figs.2(a) through 2(d) are elevational, cross-sectional views schematically showing the method in which the floating bed of this invention is used for placing seeds of a plant, sprouting the seeds and growing the plant sprouts to maturity;

Figs.3(a) and 3(b) are perspective views schematically showing another embodiment of the pad according to the present invention; and

Fig.4 is a perspective view schematically showing an alternate embodiment of the pad according to the present invention.

## Description of the Preferred Embodiments

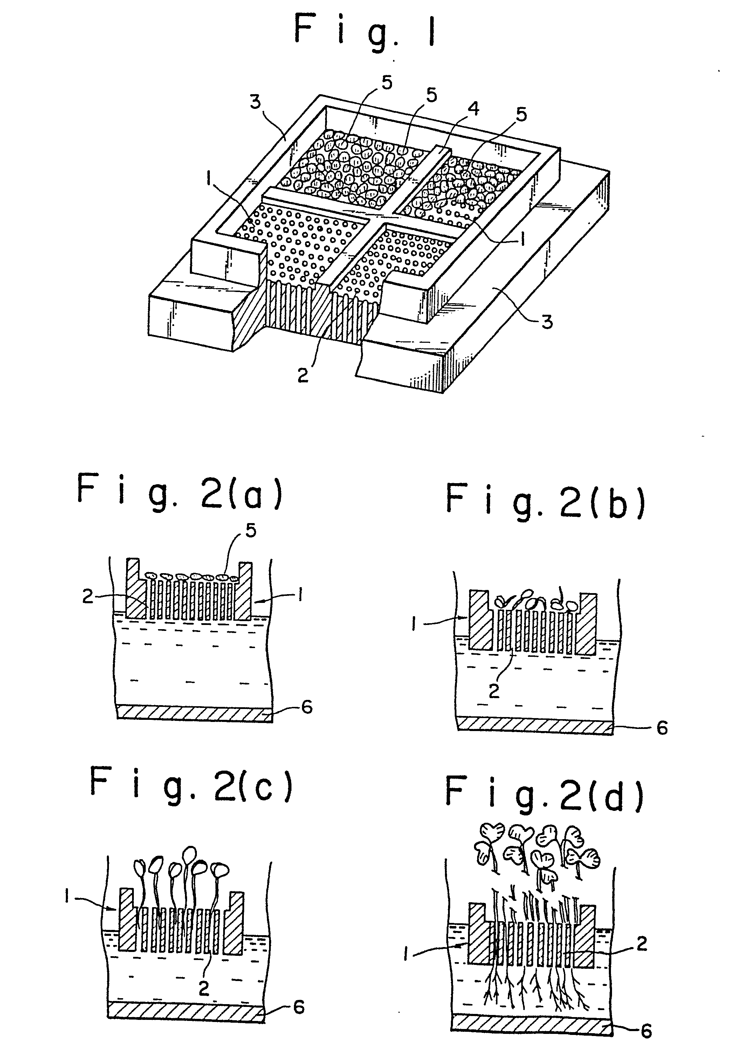

Fig.1 depicts one embodiment of the floating bed of this invention, in which the reference numeral 1 denotes a pad formed of a close celled, synthetic polymeric foam material such as foamed polystyrene of foamed polyethylene and having top and bottom sides which are substantially parallel with each other. The thickness of the pad may wary according to the floatage of the foam material and the kind of the plant to be cultured.

The pad 1 is provided with one or more through holes 2 having a diameter so that each hole may attract water therein by capillary action. The diameter of each through hole is generally in the range of 0,5 to 3 mm. The number of the through holes 2 may also vary according to the kind of the plant and the object of the culture. When the floating bed is used for educational purposes, for example, rather than the consumption of the matured plant, the number of the holes can be very small. For the growth of Japanese radish sprouts, the pad is generally provided with about 500 to 1000 through holes with a diameter of 0,5 to 3 mm per 100 $cm^2$ of the pad. In the specific embodiment shown, which is arranged to grow Japanese radish sprouts, the pad has a thickness of 2 cm, an area of 225 $cm^2$ (15 x 15 cm) and a weight of 15 g. The pad is divided into four zones each having an area of 25 $cm^2$ (5 x 5 cm) and each provided with 144 (12 x 12) of evenly distributed through holes each having a diameter of 2 mm and arranged in a honeycomb structure. As described hereinafter, the through holes serve to function as the passages of plant roots.

Indicated as 3 is a frame member for supporting the pad therein. The frame member 3 is provided with an X-shaped insertion 4 dividing the pad into the four zones. Both of the frame member 3 and the insertion 4 supporting the pad 1 in this embodiment are also formed of the same close celled, synthetic polymeric material as the pad 1 and, thus, serve as a buoyant member for the pad 1.

When the floating bed having the above-described construction is placed on water, it floats by itself on the surface of water with the bottom side thereof positioning below the level of the water. The floating of this embodiment is so designed that the bottom side thereof is submerged to the depth of 2 mm from the water level and that a load of 300 g is required for positioning the top side thereof in parallel with the water level. Since the total weight of Japanese radish sprouts matured in the whole area of the pad generally amounts to 200 to 250 g, the floating bed has a sufficient capacity for supporting the sprouts thereon while maintaining the top side thereof above the water level.

A method of growing sprouts from seeds to maturity with the use of the floating bed according to the present invention is now described below with reference to Figs.2(a) through 2(d). Seeds 5 are placed on the pad 1 and sufficiently applied with water by, for example, submerging the floating bed under the level of water contained in a tray 6. The water in the tray 6 may, if necessary, contain suitable nutrients. By the application of water, the seeds are wetted and set adjacent to the mouths of the through holes 2 and, at the same time, each of the through holes 2 of the pad 1 holds an amount of water due to capillary phenomenon. By allowing the floating bed to float on the water in the tray 6 (Fig.2(a)), each of the through holes 2 can continually retain a quantity of water therein because of the capillary attraction so that there is estabilished in each through hole a humid environment suitable for the germination. In sowing, if the size of the seeds is smaller than that of the through holes 2, it is advisable to cover the pad with a paper towel or a tissue paper, upon which the seeds are sowed.

By controlling light, temperature and other growing conditions in the customarily employed manner, the germinated sprouts, which are provided with sufficient oxygen and adequate humidity, gradually grow with the roots growing from the end portiions of the stems (or stalks) and extending through the through holes (Figs.2(b) and 2(c)). Besides the customarilly employed manner, there are some methods for accelarating the germination of the seeds and the growth of the plants. Water, on which the floating beds is floated, my be heated to about 40°C so that the germination of the plant seeds and the growth of germinated sprouts are accelerated. Further, said water may be provided with air flow so that the growth of the roots are accelerated. A sun-ray lamp also may be used to accelerate the growth of the plant, regardless of day or night. The roots further grow and emerge through the bottom of the pad to absorb nutrients. Thus, the sprouts grow further with the end portion of each of their stems being supported within respective through holes (Fig.2(d)).

In general, the germination of seeds and the growth of the germinated sprouts are adversely affected by, on one hand, drying and, on the other hand, by excess moisture. These are main causes for the retard of germination and non-uniform growth of the sprouts. With the use of the floating bed in accordance with the present invention, the humid environment once established in each of the through holes at the time of sowing can be maintained unchanged throughout the germination of seeds and the growth of the germinated sprouts, provided that the tray 6 contains water medium in an amount sufficient to allow the float of the bed. That is, the sprouts can be continually provided with an adequate degree of moisture through the roots grow passages without the need of watering and spraying. This contributes much to the reduction of manual labor.

As illustrated in Figs.2(a) through 2(d), the distance between the top side of the pad and the surface of water in the tray 6 gradually decreases with the growth of the sprouts, i.e. with the increase in weight of the sprouts. Since the floating bed has a sufficient thickness and a flotage, however, the humidity at the top side of the pad is kept constant irrespective of the growth stage of the sprouts. Thus, in accordance with the method of this invention, plant sprouts can be grown to mature in a stable manner because the capillary attraction in the roots grow passages defined by the through holes and the flotage of the bed constantly produce a moderate humid environment. Therefore, the present invention makes it possible to grow Adenophora remotiflora Miq. with an improved germination rate.

The matured sprouts may be exposed to light for greening before harvesting. Since the roots of one sprout do not entwine with other sprouts in the pad, the roots of each sprout can be easily pulled off from the pad without leaving the root tips in the through holes. Thus, upon harvest, the floating bed is ready for reuse. In home culture, the pad may be divided into a plurality of regions with respective regions being sowed in different days. This makes it possible to daily harvest and consume fresh sprouts with one floating bed. The provision of the previously described X-shaped insertion is conveniently employed to achieve this purpose.

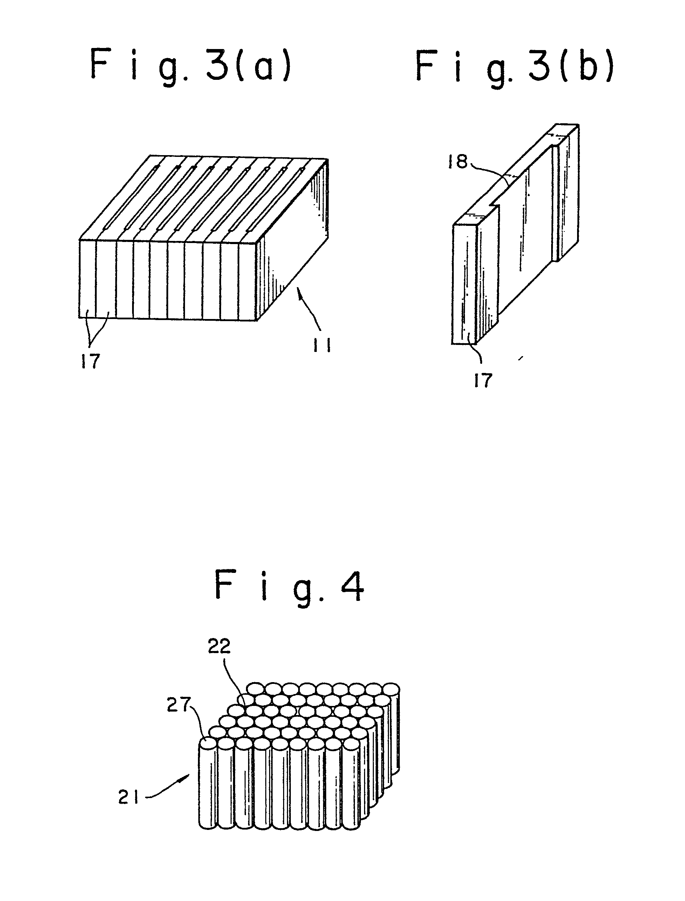

The floating bed of the present invention may be modified in a variety of constructions. Figs.3(a) and 3(b) show an alternate embodiment of the present invention, in which the pad 11 is formed of a plurality of plate elements 17. Each element 17 has a recessed portion 18 so that, when they are integrally bonded face to face, slits 12 are defined therebetween. The slits serve as roots grow passages likewise the through holes 2 of Fig.1. The width of each slit 12 may generally be in the range of 0,5 to 3 mm.

In the embodiment shown in Fig.4, the pad 21 is formed from a plurality of rods 27 each generally circular in cross section. The rods 27 are integrally bound together so that a plurality of voids 22 extending along the length of the rods 27 are defined between them. The voids 22 serve as the roots grow passage of the pad 21. In this case, at least one of the rods 27 can be formed into a cylinder so that the center hole of the cylinder can serve as at least part of the roots grow passages.

The pads shown in Figs.1, 3 and 4 can be used by themselves without the support by a frame member. When the pad is used in combination with the frame member, the latter is generally formed of a close celled, synthetic polymeric foam material so that the frame can function as buoyant member of the bed. In this case, the pad may be formed of a material other than the close celled, synthetic polymeric foam material.

The floating bed according to the present invention has a very simple structure and is very effective in hydroponically growing a variety of plants. By varying the size and thickness of the pad, the floating bed can be used in various manners such as on a large scale industrial production of plant sprouts, for home culture and for educational purposes. The floating bed may be used in trays, ponds, rivers, lakes, bags, etc..

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

Claims:

1. A floating bed for hydroponically growing plant sprouts, comprising a pad which has a three dimensional structure with its opposite sides being substantially parallel with each other and which is formed of a substantially hydrophobic material and is provided with one or more through holes each extending between and in direction substantially vertical to said opposite sides to define a roots grow passage therein, each passage having such a size as to provide capillary attraction, and said floating bed being floatable by itself on water with said opposite sides of said pad being positioned substantially in parallel with the horizontal plane, whereby each passage can continually retain water therein during the float of said bed on water.

2. A floating bed as set forth in claim 1, wherein said one or more through holes are in the form of slits.

3. A floating bed as set forth in claim 1, wherein said pad is formed of a close celled, synthetic polymeric foam material.

4. A floating bed as set forth in claim 1, further comprising an outer frame member provided around the circumference of said pad for supporting said pad thereon.

5. A floating bed as set forth in claim 4, wherein said pad is formed of a close celled, synthetic polymeric foam material.

6. A floating bed as set forth in claim 4, wherein said outer frame member is formed of a close celled, synthetic polymeric foam material.

7. A floating bed as set forth in claim 6, wherein said pad includes two or more plates integrally bonded face to face with each other, each plate having a recessed portion or portions so as to define said roots grow passage or passages between said plate.

8. A floating bed as set forth in claim 7, wherein each of said recessed protions has a shape so that slits are defined between the neighbouring plates.

9. A floating bed as set forth in claim 6, wherein said pad includes three or more rods each of which is circular in cross section and which are integrally bound with each other to define one or more spaces between said rods extending along the length of said rods, said space or spaces serving as said roots grow passage.

10. A floating bed as set forth in claim 9, wherein at least one of said rods is in the form of a cylinder, so that the hole of said cylindrical rod serves as a part of said roots grow passages.

11. A floating bed as set forth in claim 4, further comprising an X-shaped insertion with respective ends being connected to said outer frame member for partitioning said pad into four regions of generally the same area.

12. A method of germinating plant seeds and hydroponically growing the germinated sprouts, comprising the steps of:

floating a floatable bed by itself on water optionally containing nutrient, said floatable bed including a pad which has a three dimensional structure with its opposite sides being substantially parallel with each other and which is formed of a substantially hydrophobic material and is provided with a plurality of through holes each extending between and in direction substantially vertical to said opposite sides to define a roots grow passage therein, each passage having such a size as to provide capillary attraction, and said floatable bed being floatable by itself on water with said opposite sides of said pad being positioned substantially in parallel with the horizontal plane, whereby each passage can continually retain water therein throughout the float of said bed on water,

sowing the seeds on sad pad, and

allowing the seed to germinate and the germinated sprouts to grow with the roots of each sprout passing through respective one of said passage and extending into the water.

13. A method as set forth in claim 12, wherein said sowing includes placing the seed on said pad directly and adjacent to the mouths of said passages.

14. A method as set forth in claim 12, wherein said sowing includes covering the surface of said pad with an absorbent material, and placing the seeds on said absorbent material.

15. A method as set forth in claim 14, wherein said absorbent material is a paper sheet or an open celled polyurethane foam sheet.

1/2

0167638

Fig. 1

Fig. 2(a)

Fig. 2(b)

Fig. 2(c)

Fig. 2(d)

# Fig. 3(a)

# Fig. 3(b)

18

17

11

17

# Fig. 4

22

27

21

## DOCUMENTS CONSIDERED TO BE RELEVANT

| ategory | Citation of document with indication. where appropriate, of relevant passages | Relevant to claim | CLASSIFICATION OF THE APPLICATION (Int Cl 4) |
|---|---|---|---|
| A | US-A-2 175 113 (FISCHER) <br><br> * Claims 1,3,9,12,14,15; figures 1-5 * | 1,3,12 -14 | A 01 G 31/02 <br> A 01 C 1/02 |
| A | EP-A-0 036 723 (SEIKI et al.) <br><br> * Claims 1,4,7,12; figures 2-4,9,12,14 * | 1,4,6, 11 | |
| A | SOVIET INVENTIONS ILLUSTRATED, DERWENT PUBL. LTD. SECTION GENERAL (MECHANICAL, WEEK K 36), abstract no. 83-756929, page 13, 19th October 1983; & SU - A - 969 208 (POND FISHERY RES.) 07-07-1979 | 1,4 | |
| A | FR-A-1 390 943 (STERLICH) <br> * Claims 1,2; figures 1,2 * | 2 | TECHNICAL FIELDS SEARCHED (Int. Cl 4) <br><br> A 01 G <br> A 01 C |
| A | GB-A-1 313 121 (GOODALL) <br><br> * Claims 1,2,4; figures 1-6 * | 1,3,5, 12,13 | |
| A | GB-A-2 014 836 (GOODALL) <br><br> * Claims 1-3; figure 1; page 1, lines 75-103 * | 1,12, 14,15 | |
| | ---      -/- | | |

The present search report has been drawn up for all claims

| Place of search <br> THE HAGUE | Date of completion of the search <br> 30-09-1985 | Examiner <br> MEINDERS H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl 4) |
|---|---|---|---|
| A | US-A-4 057 930 (BARHAM)<br>* Claims 1,12,17; figures 3,5,11 * | 16,17 | |
| A | AU-A- 46 644<br>(WATERHOUSE(1968))<br>* Claims 1,2,4 * | 18 | |
|  |  |  | TECHNICAL FIELDS SEARCHED (Int Cl 4) |

The present search report has been drawn up for all claims

| Place of search<br>THE HAGUE | Date of completion of the search<br>30-09-1985 | Examiner<br>MEINDERS H. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82